# EUROPEAN PATENT APPLICATION

(11) **EP 4 215 971 A1**
(43) Date of publication of application: **26.07.2023**
(21) Application number: 22152746.8
(22) Date of filing: 21.01.2022
(51) Int. Cl.: G02B 21/00, G01N 21/64, G02B 21/36, G06T 7/00, G06V 20/69

(54) **METHOD FOR SAVING AN IMAGE ACQUIRED USING SINGLE MOLECULE LOCALIZATION MICROSCOPY**

(71) Applicant: Abbelight, 94230 Cachan (FR)
(72) Inventor: BOURG, Nicolas, 94230 CACHAN (FR); KERGUTUIL, Yann, 94230 CACHAN (FR); LAZZARINO, Benjamin, 94230 CACHAN (FR); CAORSI, Valentina, 94230 CACHAN (FR)
(74) Representative: Atout PI Laplace

(57) **Abstract**

The invention relates to a method for saving an image acquired using single molecule localization microscopy. The method comprises acquiring an image of a sample comprising a plurality of single fluorescent molecules using single molecule localization microscopy; detecting a plurality of spots in the image, each spot representing one single fluorescent molecule of the plurality of single fluorescent molecules; determining one or more local regions of interest comprising the detected plurality of spots; determining metadata for defining each of the one or more local regions of interest; creating one or more image files, wherein each of the one or more image files comprises image data of each of the one or more local regions of interest and the determined metadata defining each of the one or more local regions of interest; and saving the one or more image files.

## Description

### TECHNICAL FIELD

The present invention relates to a method and apparatus for saving an image acquired using single molecule localization microscopy.

### BACKGROUND

Single molecule localization microscopy (SMLM) is based on the delayed stochastic emission of molecules in order to achieve the emission of single fluorescent molecules. A sample containing fluorescent molecules is illuminated using an irradiance tuned in such a way that, on average, at each time there is only one active (i.e. emitting) molecule in a focal volume of an observing microscope. In particular, each fluorescent molecule is labelled with SMLM fluorophores so that the fluorescent molecules undergo reversible transitions between ON and OFF emission states (i.e. blink) when being under illumination. Images acquired by SMLM present image spots called point spread functions (PSFs), and each spot represents the image of a fluorescent molecule. From a PSF, it is possible to measure the position of a molecule by determining the center of the spot using an algorithm. This position can be determined with a precision which can be much better than the diffraction-limited resolution of the microscope. This stochastic process is repeated for several tens of thousands of images to obtain a final super-resolved image with a high spatial resolution (up to 10 nm).

Tens of thousands of images are necessary to reconstruct a final super-resolved image, with a size between a few tens and a few hundred Gigabytes. Therefore, a large storage space (such as large storage servers) is required to save SMLM data sets, making it difficult to use, for example, cloud storage services.

### BRIEF SUMMARY OF THE INVENTION

These problems are solved or mitigated by the claimed apparatus and method.

Approximately 10% of the pixels of each of the tens of thousands of acquired images are used for reconstructing a super-resolved image. In particular, most biological samples comprise a heterogenic density of fluorescent molecules, and regions of a sample may have no fluorescent molecules. Therefore, in this invention, regions of interest will only include regions comprising fluorescent molecules. Additionally, since single fluorescent molecules blink under illumination, regions of an acquired image may present no PSF since some of the fluorescent molecules are "OFF" when acquiring the image.

Instead of saving each image, and consequently all the pixels of each image, which engenders large data sets for each SMLM experiment, the present invention relates to the determination of regions of interest for each image acquired during an SMLM experiment, the regions of interest comprising the PSFs. From the determined regions of interest, it is possible to only store the pixels corresponding to the regions of interest, and therefore excluding the regions presenting no fluorescent molecules.

### BRIEF DESCRIPTION OF THE DRAWINGS

Embodiments of the invention will now be described with reference to the accompanying drawings, in which:
Figure 1a is a schematic of an apparatus for saving an image acquired using single molecule localization microscopy according to an example;
Figure 1b is a schematic of an apparatus for saving an image acquired using single molecule localization microscopy according to an example;
Figure 2 represents examples of images acquired with the apparatus, according to an example; and
Figure 3 is a flow diagram of a method of saving an image acquired using single molecule localization microscopy according to an example.

### DETAILED DESCRIPTION

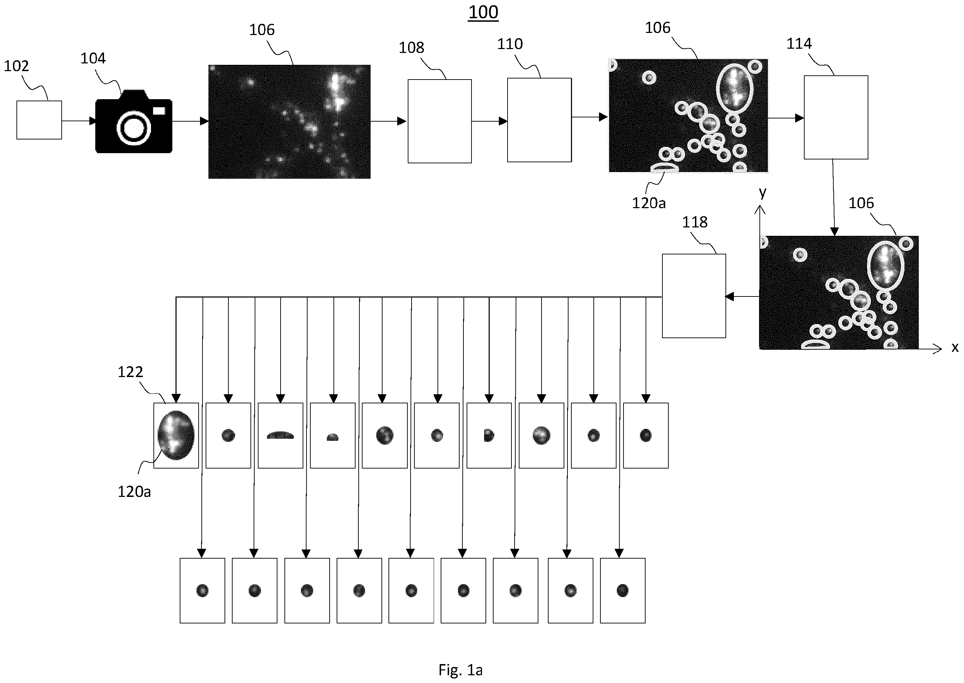

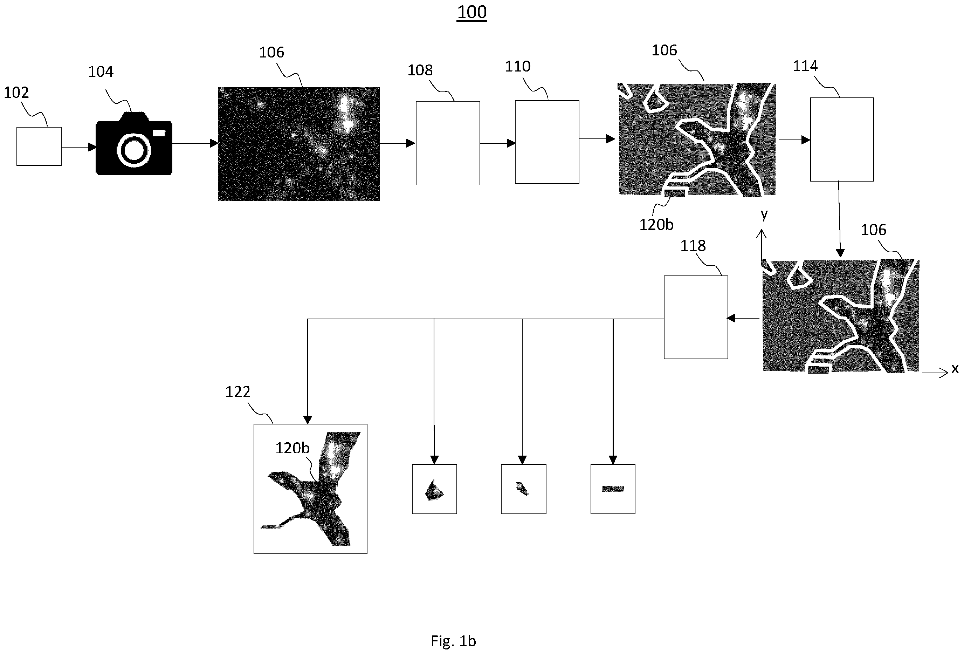

Figure 1a and Figure 1b are schematic diagrams of an apparatus 100 for saving an image of a sample 102 acquired using single molecule localization microscopy (SMLM), according to two examples.

The sample 102 may be made of, for example, cell (such as neurons) or tissue samples comprising molecules which have been fluorescently labeled. For example, the fluorescent molecules may have been labelled using SMLM fluorophores such as photoswitchable, photoactivable, photoconvertible, spontaneously blinking or temporarily blinking fluorophores. That way, once labelled, the fluorescent molecules undergo reversible transitions between ON and OFF emission states (i.e. blink) when being under illumination. In general, samples comprising fluorescent molecules have a heterogeneous density of fluorescent molecules. Therefore, regions of the sample 102 may have a high density of fluorescent molecules while other regions may have a low density of fluorescent molecules. Additionally or alternatively, other regions may have no fluorescent molecules.

As illustrated in Figure 1a, the apparatus 100 comprises an image acquisition unit 104, a detection unit 108, a determination 110, a calculation unit 114 and a file unit 118. Each of the detection unit 108, determination unit 110, calculation unit 114 and file unit 118 may be implemented using hardware, software, and/or a combination thereof. For example, hardware devices may be implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, or any other device capable of responding to and executing instructions in a defined manner. Software may include a computer program, program code, instructions, or some combination thereof, for independently or collectively instructing or configuring a hardware device to operate as desired. The computer program and/or program code may include program or computer-readable instructions, software components, software modules, data files, data structures, and/or the like, capable of being implemented by one or more hardware devices, such as one or more of the hardware devices mentioned above. When a hardware device is a computer processing device (e.g. CPU, a controller, an ALU, a digital signal processor, a microcomputer, a microprocessor, etc.), the computer processing device may be configured to carry out program code by performing arithmetical, logical, and input/output operations, according to the program code. Each unit may also include one or more storage devices. The one or more storage devices may be tangible or non-transitory computer-readable storage media, such as random access memory (RAM), read only memory (ROM), a permanent mass storage device (such as a disk drive), solid state (e.g., NAND flash) device, and/or any other like data storage mechanism capable of storing and recording data. The one or more storage devices may be configured to store computer programs, program code, instructions, or some combination thereof, for one or more operating systems and/or for implementing the example embodiments described herein. The computer programs, program code, instructions, or some combination thereof, may also be loaded from a separate computer readable storage medium into the one or more storage devices and/or one or more computer processing devices using a drive mechanism. Such separate computer readable storage medium may include a Universal Serial Bus (USB) flash drive, a memory stick, a Blu-ray/DVD/CD-ROM drive, a memory card, and/or other like computer readable storage media.

Alternatively, two or more units of the detection unit 108, determination unit 110, calculation unit 114 and file unit 118 may be implemented by the same hardware and/or software. For example, all of the detection unit 108, determination unit 110, calculation unit 114 and file unit 118 may be implemented by a single computer storage medium capable of providing instructions to each unit to carry out functions described below.

The image acquisition unit 104 is configured to acquire an image 106 of the sample 102 while the sample 102 is under illumination. The acquisition unit 104 may be, for example a camera, such as a sCMOS camera. In order to illuminate the sample 102, a scanning unit (not shown) comprising a laser emitting a first wavelength which corresponds to the excitation wavelength of the fluorophores which have been used to label the molecules comprised in the sample 102. For example, the laser may be a diode-pumped solid-state laser emitting at 638 nm. The scanning unit may be, for example, an Adaptable Scanning for Tunable Excitation Regions (ASTER) system disclosed in Mau et. al¹.

The image 106 acquired while being under illumination is acquired by the image acquisition unit 104 at a second wavelength which corresponds to the emission wavelength of the fluorophores which have been used to label the molecules of the sample 102. The first wavelength and the second wavelength may be the same. Figure 1a and Figure 1b show an example of the image 106 which presents spots, or point spread functions (PSFs), and each PSF represent a single fluorescent molecule. The density of PSFs of the image 106 is not uniform as, in this example, the sample 102 presents a heterogeneous density of fluorescent molecules. In particular, the sample 102, and therefore, the image 106, presents high density regions (i.e. regions showing a high density of spots), low density regions (i.e. regions showing a low density of spots), mid density regions (i.e. regions showing a mid density of spots) and regions with no fluorescent molecules (i.e. dark regions).

The detection unit 108 receives the image 106 from the image acquisition unit 104 and is configured to detect the plurality of spots in the image 106, each spot representing one single fluorescent molecule of the single fluorescent molecules comprised in the sample 102. The detection unit 108 may be implemented using an algorithm which analyses the pixels of the images 106 and detects contrast between the pixels, i.e. the variations in intensity of the pixels. In particular, the algorithm detects contours of high contrast which represents the edges of each spot. The detection unit 108 can then define a mapping of the spots on the image 106, which indicates the position of each spot based on the detected contrast. In an example, the method described in Bourg et. al² is used to detect the plurality of spots in the image 106. In particular, each spot can be modelled as a dipolar emitter radiating in the far field. Addtionaly, each spot has a non-propagative near-field component which depends on a surrounding refractive index nₘ. In the presence of an interface (such as a glass slide) having a refractive index of n_{g} > nₘ (where m indicates the medium and g indicates the glass interface), the transmitted light follows the Snell-Descartes law of refraction. The refracted light is emitted within a cone which is limited by the critical angle θ_{c} = arcsin (nₘ/n_{g}), referred to as under-critical angle fluorescence (UAF). However, if a distance d between the fluorescent molecule the interface is smaller than the fluorescence wavelength λₑₘ, then supercritical angle fluorescence (SAF) emission will be observed as well. The non-propagative near-field component in the interface surrounding the spot becomes propagative beyond the critical angle θ_{c} inside the interface having a refractive index n_{g} > nₘ. SAF emission can be detected for fluorophores in the cellular medium located in the vicinity of the coverslip. The number of UAF photons N^{UAF} remains nearly constant as a function of the distance d, but the number of SAF photons N^{SAF} decreases approximately exponentially. Hence, by measuring simultaneously N^{SAF} and N^{UAF} and computaing the SAF ratio ρ^{SAF} = N^{SAF}/N^{UAF} for each spot, it is possible to determine an absolute axial position of the fluorophore.

The determination unit 110 is configured to define local regions of interest 120a, 120b comprising the spots in the image 106. In particular, the determination unit 110 receives the mapping of the spots from the detection unit 108. Based on the position of the spots, the determination unit 110 defines the local regions of interest 120a, 120b which are optimized to include all the regions of the image 106 which comprise the PSFs while excluding the regions which do not comprise PSFs. For example, as shown in Figure 1a, the local regions of interest 120a are ellipses which are defined in a way which minimizes the overall surface of the local regions of interest 120a. Alternatively, as shown in Figure 1b, the local regions of interest 120b may be polygons. For example, the polygons may be defined so that each polygon comprises the highest possible number of PSFs and the smallest possible surface of the region which comprises no PSF. In another example, the local regions of interest 120b may include at least one ellipse and one polygon. In another example, the local regions of interest 120b may comprise only one PSF.

The calculation unit 114 is configured to determine metadata defining each of the local regions of interest 120a, 120b. For example, the metadata may define the shape of each local region of interest 120a, 120b (e.g. an ellipse or a polygon) and/or coordinates defining a position of the local regions of interest 120a, 120b in the image 106. For example, the calculation unit 114 may define axes x, y corresponding to two of the edges of the image 106 on which the local regions of interest 120a, 120b are defined. Considering example of Figure 1a, the calculation unit 114 may define coordinates in the x-y plane corresponding to the center, a vertex and a co-vertex of each ellipse 120a. Alternatively, considering the example of Figure 1b, the calculation unit 114 may define coordinates in the x-y plane corresponding to each vertex of each polygon 120b.

The file unit 118 creates image files 122 comprising image data of the local regions of interest 120a, 120b and the determined metadata. For example, as seen in Figure 1a, the file unit 118 creates 19 image files 122, each image file 122 comprising image data of each of the 19 ellipses 120a defined by the determination unit 110. Alternatively, as seen in Figure 1b, the file unit 118 creates four image files 122, each image file 122 comprising image data of each of the four polygons defined in by the determination unit 110.

Further, the file unit 118 saves the image files 122. For example, the file unit 118 saves the image files 122 comprising image data of the local regions of interest 120a, 120b and their corresponding metadata in a file which may be compressed. The file may be stored in a local storage space and/or a cloud storage service.

In general, in SMLM, several tens of thousands of images are used to obtain a final super-resolved image with a high spatial resolution. Therefore, the process performed by the apparatus 100 described above may be repeated multiple times. For example, the process may be performed thousands or tens of thousands of times. Each time the process performed by the apparatus 100 is repeated, a further image is acquired by the image acquisition unit 104, further PSFs are detected in the further image by the detection unit 108, further local regions of interest are determined by the determination unit 110, further metadata defining e the further local regions of interest are determined by the calculation unit 114, and further image files comprising image data of the further local regions of interest and metadata are created and saved by the file unit 118. The file unit 118 may create a final file which includes all the image files (i.e. the image files 122 and the further image files). The final file may be compressed and/or saved in a local storage space and/or a cloud storage service. The final file may be saved in database and the metadata may be used for searching for a particular region of interest 120a, 120b in the database.

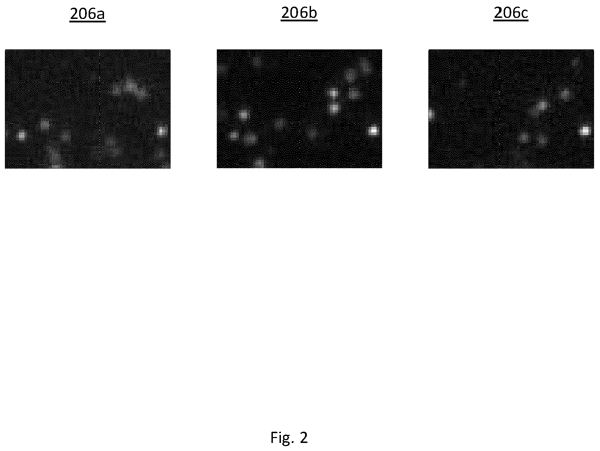

Additionally, the process performed by the apparatus 100 described above may be repeated at least three times and a first image 206a, a second image 206b and a third image 206b may be acquired by the image acquiring unit 104, and the determination unit 110 may determine a background of the second image 206b. However, as shown in Figure 2, the first image 206a, second image 206b and third image 206b do not present the same PSFs since they were acquired at different times. In particular, since the fluorescent molecules in the sample 102 blink, they do not emit at the same time, and images acquired at different times will show different emitting fluorescent molecules. Therefore, the determination unit 110 may determine the background of the second image 206b by comparing the second image 206b to the image acquired before (i.e. the first image 206a) and after (i.e. the third image 206c). In particular, the background corresponds to the regions of the image which do not comprise PSFs. However, since the molecules do not emit at the same time, a dark region, i.e. a region which does not show fluorescent molecules, may comprise PSFs at another time. Therefore, in order to subtract the background, several images must be considered. For example, the determination unit 110 may combine the regions of interest 120a, 120b in each of the first image 206a, a second image 206b and a third image 206b, and determine the background which corresponds to the remaining regions of the second image 206b. Further, the file unit 118 may create a background-free image file which comprises image data of the second image 206b from which the background has been subtracted. The file unit 118 may save the image file. As indicated above, in SMLM, several tens of thousands of images are used to obtain a final super-resolved image with a high spatial resolution. Therefore, tens of thousands of images may be used to remove the background of an image acquired in an SMLM experiment. In an example, median temporal filtering may be used to remove the background of an image acquired in an SMLM experiment, as described in Hoogendoorn et. al³.

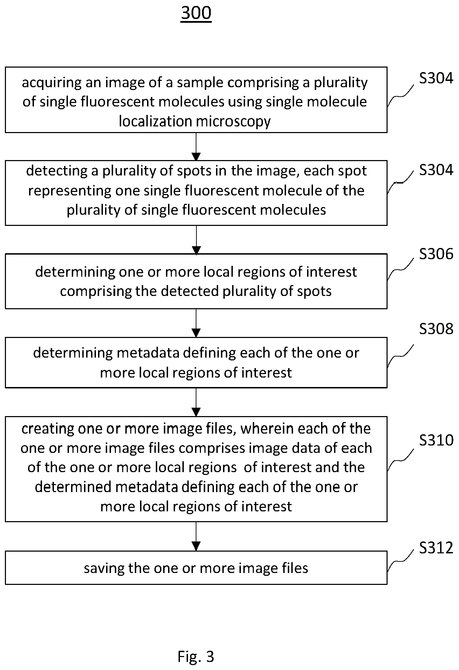

Figure 3 is a flow diagram depicting a method 300 for saving an image 106 acquired using single molecule localization microscopy. For example, the method 300 may be implemented by the apparatus 100 described above with reference to Figure 1a and Figure 1b.

At block 302, an image 106 of a sample 102 comprising a plurality of single fluorescent molecules is acquired using single molecule localization microscopy. In an example, the image 106 is acquired with a camera which is part of an Adaptable Scanning for Tunable Excitation Regions (ASTER) system.

At block 304, a plurality of spots are detected in the image 106, each spot representing one single fluorescent molecule of the plurality of single fluorescent molecules. In an example, the spots are detected with an algorithm which analyses contrast in the image 106.

At block 306, one or more local regions of interest 120a, 120b comprising the detected plurality of spots are determined. For example, the regions of interest 120a, 120b may have a shape which is polygonal shape and/or an elliptical shape. In an example, the regions of interest 120a, 120b may comprise only one spot.

At block 308, metadata defining each of the one or more local regions of interest are determined. For example, the metadata may include the coordinates of the center and a vertex and a co-vertex of an ellipse for a local region of interest 120a which has an elliptical shape, and the metadata include the coordinates of the vertices of a polygon for a local region of interest 120b which has a polygonal shape.

At block 310, one or more image files 122 are created, wherein each of the one or more image files 122 comprises image data of each of the one or more local regions of interest 120a, 120b and the determined metadata defining each of the one or more local regions of interest 120a, 120b.

At block 312 the one or more image files are saved. For example, the image files 122 may be saved in a cloud storage service.

Since tens of thousands of images are necessary to reconstruct a final super-resolved image in SMLM experiments, the method 300 may be repeated multiple times. Each time the method is repeated a further image 106 of the sample 102 is acquired, a further plurality of spots is detected in the further image 106, further one or more local regions of interest 120a, 120b comprising the further detected plurality of spots are detected, further metadata defining each of the further one or more the local regions of interest 120a are determined, 120b and further one or more image files 122 are created. Each of the further one or more image files comprises further image data of each of further one or more local regions of interest and further metadata defining each of the further one or more local regions of interest. A final file comprising the image data of each of the one or more image files and the further image data of the further one or more image files and saved, for example in a cloud storage service.

In an example, the method 300 may be performed three times. In this example, a first image 206a, a second image 206b and a third image 206c may be acquired at block 302, and the steps described above are repeated for each of the first image 206a, second image 206b and third image 206c. Each of the first image 206a, second image 206b and third image 206c present a background, which represents a region of the images which does not comprise local regions of interest. The background of the second image may be determined based on the regions of interest 120a, 120b determined for each of the first image 206a, the second image 206b and the third image 206c. Then, the background of the second image 206b may be subtracted and a background-free image file comprising image data of the second image 206b without the background may be created.

While the invention has been illustrated and described in detail with the help of a preferred embodiment, the invention is not limited to the disclosed examples. Other variations can be deducted by those skilled in the art without leaving the scope of protection of the claimed invention. For example, while examples of local regions of interest have been illustrated by ellipses and polygons, other shapes may be used. In another example, the shape of the local regions of interest may be a circle and the metadata may define a radius of the circle. Additionally, while the method described in Bourg et. al² has been used to detect PSFs, different methods may be used to detect the spots and define the regions of interest. For example, the regions of interests may be selected manually by a user. Further, while the examples have been described with the acquiring system of the ASTER system, other system may be used to scan samples and acquire images.

### REFERENCES

1. Mau et. al, Fast widefield scan provides tunable and uniform illumination optimizing super-resolution microscopy on large fields, Nature Communications, vol. 12, 3077, 2021.
2. Bourg et. al, Direct optical nanoscopy with axially localized detection, Nature Photonics, vol, 9, 587, 2015.
3. Hoogendoorn et. al, The fidelity of stochastic single-molecule super-resolution reconstructions critically depends upon robust background estimation, Scientific Reports, 4, 3854, 2014.

## Claims

1. A method for saving an image acquired using single molecule localization microscopy, the method comprising:
a) acquiring an image of a sample comprising a plurality of single fluorescent molecules using single molecule localization microscopy;
b) detecting a plurality of spots in the image, each spot representing one single fluorescent molecule of the plurality of single fluorescent molecules;
c) determining one or more local regions of interest of the image comprising the detected plurality of spots;
d) determining metadata defining each of the one or more local regions of interest;
e) creating one or more image files, wherein each of the one or more image files comprises image data of each of the one or more local regions of interest and the determined metadata defining each of the one or more local regions of interest; and
f) saving the one or more image files.

2. A method according to claim 1, wherein the method is repeated multiple times, and each time the method is repeated, the method comprises repeating steps a) to e) and:
g) creating further one or more image files, wherein each of the further one or more image files comprises further image data of each of further one or more local regions of interest and further metadata defining each of the further one or more local regions of interest; and
h) creating a final file comprising the image data of each of the one or more image files and the further image data of the further one or more image files.

3. A method according to claim 2, wherein the method is performed at least three times wherein a first image, a second image and a third image are acquired at step a) and the steps b) to h) are performed for each of the first image, the second image and the third image, and the method comprises:
i) determining a background of the second image based on the further one or more regions of interest determined for each of the first image, the second image and the third image;
j) subtracting the background of the second image; and
k) creating a background-free image file comprising image data of the second image without the background.

4. A method according to any of the preceding claims, wherein each of the one or more local regions have a shape which is a polygonal shape and/or an elliptical shape, and the metadata define the shape and a position of the one or more local regions in the image.

5. An apparatus for saving an image acquired using single molecule localization microscopy, the apparatus comprising:
an image acquisition unit configured to acquire an image of a sample comprising a plurality single fluorescent molecules;
a detection unit configured to detect a plurality of spots in the image, each spot representing one single fluorescent molecule of the plurality of single fluorescent molecules;
a determination unit configured to determine one or more local regions of interest comprising the detected plurality of spots;
a calculation unit configured to determine metadata defining each of the one or more local regions of interest;
a file unit configured to create one or more image files and save the one or more image files,
wherein each of the one or more image files comprises image data of each of the one or more local regions of interest and the determined metadata defining each of the one or more local regions of interest.

6. An apparatus according to claim 5, wherein the image acquisition unit is configured to acquire further images of the sample, and for each of the acquired further images, the file unit is configured to:
create further one or more image files, wherein each of the further one or more image files comprises further image data of each of further one or more local regions of interest and further metadata defining each of the further one or more local regions of interest; and
create a final file comprising the image data of each of the one or more image files and the further image data of the further one or more image files.

7. An apparatus according to claim 6, wherein the image acquisition unit is configured to acquire a first image, a second image and a third image, and:
the determination unit is configured to determine a background of the second image based on the further one or more regions of interest determined for each of the first image, the second image and the third image;
the determination unit is configured to subtract the background of the second image; and
the file unit is configured to create a background-free image file comprising image data the second image without the background.

8. A method according to any one of claims 5 to 7, wherein each of the one or more local regions have a shape which is a polygonal shape and/or an elliptical shape, and the metadata define the shape and a position of the one or more local regions in the image.
